# NEUE EUROPÄISCHE PATENTSCHRIFT

(11) **EP 0 136 398 B2**
(45) Veröffentlichungstag und Bekanntmachung des Hinweises auf die Entscheidung über den Einspruch: **20.08.1997**
(45) Hinweis auf die Patenterteilung: 05.09.1990
(21) Anmeldenummer: 84105232.7
(22) Anmeldetag: 09.05.1984
(51) Int. Cl.: B60R 16/02

(54) **Einrichtung zum Abfragen und Steuern von mehreren Konponenten eines Fahrzeugs**
Questioning and controlling device for several vehicle components
Dispositif pour interroger et commander plusieurs composants d'un véhicule

(30) Priorität: 04.10.1983 DE 3335932
(43) Veröffentlichungstag der Anmeldung: 10.04.1985
(73) Patentinhaber: WABCO GmbH, 30453 Hannover (DE)
(72) Erfinder: Neuhaus, Detlev, Dipl. Ing., D-3012 Langenhagen (DE); Hesse, Karl-Heinz, Dipl. Ing., D-3007 Gehrden (DE); Liermann, Peter, Ing. Grad., D-3013 Barsingshausen (DE)
(74) Vertreter: Schrödter, Manfred, Dipl.-Ing.

(56) Entgegenhaltungen:
- EP-A- 0 000 427
- EP-A- 0 051 849
- EP-A- 0 082 300
- DE-A- 2 433 025
- DE-A- 2 815 303
- DE-A- 3 151 628
- INGENIEURS DE L'AUTOMOBILE, Band 8, November 1984, Seiten 71-78, Paris, FR; P.-J. SALVAY et al.: "Le multiplexage Lucas"
- "Einführung in die Mikroprozessortechnik", Seiten 33, 135, 137, 259, 263 u. 265 von Texas Instruments Deutschland GmbH, Mai 1977, Freising, DE
- "Einführung in die Informatik", Carl Hanser Verlag, München Wien 1980, Teil 2, Seiten 296-311.

## Beschreibung

Die Erfindung betrifft ein Multiplex-System zum Abfragen und Steuern von mehreren Komponenten eines Fahrzeuges gemäß dem Oberbegriff des Patentanspruchs 1.

Aus der EP-A-00 82 300 ist ein solchen Multiplex-System bekannt, dessen Sender mit Mikrocomputern ausgerüstet ist. Diese dienen aber lediglich zur Erzeugung und zum Lesen von Multiplex-Datenwörtern bzw. Befehls-Telegrammen und führen keine intelligenten Steuer- und Regel-Funktionen aus. Zur Erhöhung der Betriebssicherheit sind in der genannten Entgegenhaltung zwei Mikrocomputer parallel geschaltet. Die ebenfalls aus der genannten Entgegenhaltung bekannte Anzeige- und Tastatureinheit enthält ebenfalls keine eigene Intelligenz und ist auch nicht mit einem eigenem Mikrocomputer ausgerüstet.

Durch die DE-A-24 33 025 ist eine Einrichtung zum Steuern und Kontrollieren von elektrischen Schaltvorgängen in einem Kraftfahrzeug bekannt, bei der in der zentralen Sendeeinheit gewisse logische Verknüpfungen von Komponenten-Ausgangssignalen vorgenommen werden, die als Rückmeldesignale über den Zustand von Schaltern und Lampen des Kraftfahrzeuges zur zentralen Sendeeinheit übertragen werden. Eine weitergehende Verarbeitung von Komponenten-Signalen ist bei der bekannten Einrichtung nicht vorgesehen.

Es gibt jedoch eine Reihe von Funktionen, die in zunehmendem Maße ebenfalls über ein Multiplex-Leitungssystem ausgeführt werden können. So kann man z.B. daran denken, die für ein Antiblockiersystem abzufragenden Sensoren und anzusteuernden Magnetventile als Komponenten an die Unterverteilungs-Einrichtung eines Multiplex-Leitungssystems anzuschließen. In Anwendung der Lehre der erwähnten DE-A-24 33 025 könnte man weiter daran denken, die zentrale Sendeeinheit so auszubilden, daß diese die für die Funktion "Antiblockiersystem" erforderlichen Abfragen, Auswertungen und Verknüpfungen unter Verwendung von bereits für den Betrieb des Multiplex-Leitungssystems vorhandenen Schaltkreisen mit übernimmt.

Insbesondere in dem Fall, daß man noch weitere spezielle Funktionen, wie z.B. "Klimasteuerung", "Türsteuerung" (z.B. in Omnibussen) oder "Anzeigen und Bedienen" realisieren will, würde die zentrale Sendeeinheit sehr aufwendig und damit störanfällig. Ein Ausfall eines Teiles einer solchen zentralen Sendeeinheit könnte die Arbeitsweise aller realisierten weiteren Funktionen gefährden. Im Falle eines Defektes muß u.U. die ganze Sendeeinheit ausgewechselt werden.

Der Erfindung liegt deshalb die Aufgabe zugrunde, eine Einrichtung der eingangs genannten Art zu schaffen, die mit geringem Aufwand einen weitgehend sicheren Betrieb ermöglicht.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung weist den Vorteil auf, daß mit geringem Aufwand eine Erweiterung oder Reduzierung der Einrichtung durch einfaches Hinzufügen oder Abtrennen von Modulen verschiedener Funktion möglich ist. Es ist von erheblichem Vorteil, daß die Unterverteilungs-Einrichtungen sowie die zentrale Sendeeinheit unabhängig von dem speziellen Aufbau der anschließbaren Module standardisiert ausgeführt werden können. Es ist lediglich ein Standard über die Anschlüsse der zentralen Sendeeinheit und der Unterverteilung-Einrichtungen und über die Übertragungsweise des Multiplex-Leitungssystems und des Datenbus-Systems erforderlich. Bei einer Störung in einer der Baugruppen muß nur das betreffende Modul oder die vergleichsweise einfach aufgebaute zentrale Sendeeinheit ausgewechselt werden. Darüber hinaus ist es möglich, daß die Module mit Programmen für entsprechende programmierbare Rechner versehen werden können und daß bei einer Weiterentwicklung oder Veränderung der Funktionen des betreffenden Moduls lediglich das Programm ausgewechselt werden muß.

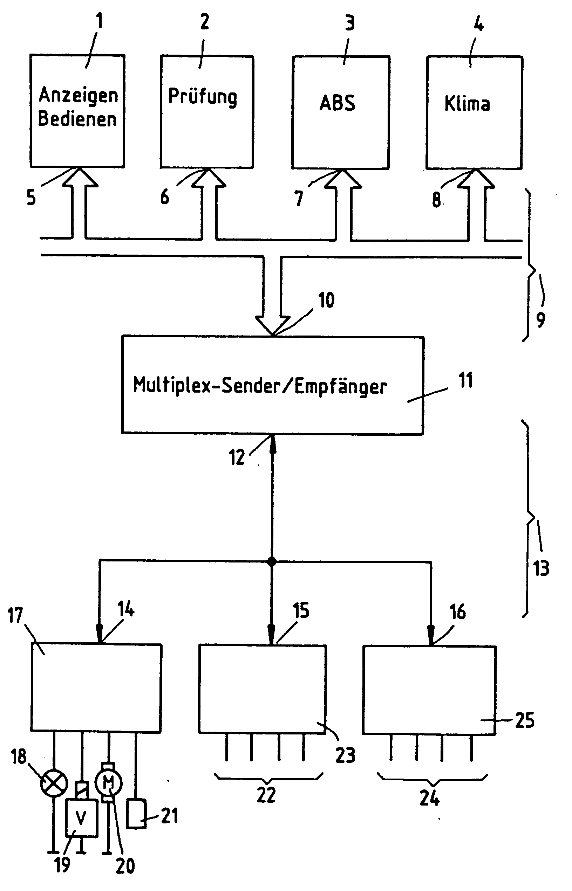

Die Erfindung wird anhand eines Ausführungsbeispiels, das in der Zeichnung dargestellt ist, näher erläutert.

Die Zeichnung zeigt eine als Multiplex-Sender/Empfänger ausgebildete Sendeeinheit 11 eines Kraftfahrzeugs und drei Unterverteilungs-Einrichtungen 17, 23 und 25, wobei die Unterverteilungs-Einrichtungen 17, 23 und 25, über ein Multiplex-Leitungssystem 13 mit der Sendeeinheit 11 verbunden sind. Die Sendeeinheit 11 weist Multiplex-Eingänge und -Ausgänge 12 auf, an die das Multiplex-Leitungssystem 13 angeschlossen ist. Entsprechend weisen die Unterverteilungs-Einrichtungen 17, 23 und 25 Multiplex-Eingänge und -Ausgänge 14, 15 und 16 auf.

An die Unterverteilungs-Einrichtungen 17, 23 und 25 sind jeweils vier Komponenten des Kraftfahrzeugs angeschlossen. Dies sind beispielsweise bei der Unterverteilungs-Einrichtung 17 eine Lampe 18, ein Magnetventil 19, ein Elektromotor 20 und ein Sensor 21. Entsprechend sind an die Eingänge und Ausgänge 22 und 24 der Unterverteilungs-Einrichtungen 23 und 25 je vier weitere Komponenten des Kraftfahrzeugs angeschlossen.

Das Multiplex-Leitungssystem 13 wird beispielsweise im Zeitmultiplex- oder im Frequenzmultiplex-Betrieb betrieben. Über das Multiplex-Leitungssystem 13 werden zwischen der Sendeeinheit 11 einerseits und den Unterverteilungs-Einrichtungen 17, 23 und 25 andererseits Ausgangssignale der an die Unterverteilungs-Einrichtungen 17, 23 und 25 angeschlossenen Komponenten sowie Steuersignale für die erwähnten Komponenten ausgetauscht. Es ist z.B. möglich, daß die Komponenten 18, 19, 20, 21, 22 und 24 ständig von der Sendeeinheit 11 abgefragt werden. Es ist aber auch möglich, daß die erwähnten Komponenten von der Sendeeinheit 11 nur zu zuvor bestimmten oder vorbestimmbaren Zeiten abgefragt werden. Dabei ist noch die Verwendung einer Prioritäts-Schaltungseinrichtung möglich, um bestimmte Komponenten häufiger oder bevorzugt abfragen bzw. ansteuern zu können.

Die von der Sendeeinheit 11 abgefragten Komponenten-Ausgangssignale bzw. die diesen Signalen entsprechenden Datenwörter eines binären Datensystems, sind an Dateneingängen und -ausgängen 10 der Sendeeinheit 11 abgreifbar. Über diese Dateneingänge und -ausgänge 10 erhält die Sendeeinheit 11 ferner Datenwörter oder Signale zugeführt, die zum Steuern bzw. Abfragen der Komponenten bzw. der Unterverteilungs-Einrichtungen 17, 23 und 25 dienen.

Zum Auswerten der von der Sendeeinheit 11 an den Datenausgängen 10 abrufbaren Datenwörter und Signale ist eine Reihe von speziellen, gesondert angeordneten Modulen vorgesehen, die ihrerseits Dateneingänge und -ausgänge aufweisen. Zwischen den Dateneingängen und -ausgängen 10 der Sendeeinheit 11 und den Dateneingängen und -ausgängen 5, 6, 7 und 8 der Module 1, 2, 3 und 4 ist ein Datenbus-System 9 angeordnet, das z.B. in üblicher Weise und nach Art eines Computer-Datenbusses Daten und Signale zwischen den Modulen 1, 2, 3 und 4 einerseits und der Sendeeinheit 11 andererseits auszutauschen erlaubt. Dieser Austausch von Daten und Signalen auf dem Datenbus-System 9 kann z.B. im Multiplex-Betrieb mit Adressen und Quittiersignalen erfolgen.

Die gesondert angeordneten Module 1, 2, 3 und 4 erfüllen je eine spezielle Funktion. So ist das Modul 1 dafür vorgesehen, die üblichen Anzeigen eines Kraftfahrzeuges wie z.B. Geschwindigkeit, Motordrehzahl, Betriebsmittel-Verbrauch, Kühlwasser-Temperatur etc. vorzunehmen. Aus den Ausgangssignalen von Komponenten wie Drehzahlmesser, Temperaturfühler etc. berechnet das Modul 1 die erforderlichen anzuzeigenden Werte und gibt diese an ein nicht dargestelltes Anzeigefeld. Das Modul 2 ist dafür vorgesehen, alle Komponenten des Kraftfahrzeugs auf Funktionssicherheit und Betriebszustände hin zu überprüfen und gegebenenfalls entsprechende Fehlersignale zu erzeugen, die über das Modul 1 zur Anzeige gebracht werden können. Das Modul 3 enthält im wesentlichen die Regeleinheit eines Antiblockiersystems. Aus den Ausgangs-Signalen von Sensor-Komponenten werden im Modul 3 in üblicher Weise Regelsignale wie z.B. Geschwindigkeits-, Verzögerungs-, und Schlupfsignale erzeugt. Ferner werden im Modul 3 bestimmte Steuersignale für die ebenfalls als Komponenten an eine Unterverteilungs-Einrichtung angeschlossenen Stellglieder (Magnetventile) der z.B. mit Druckluft betriebenen Bremsanlage des Kraftfahrzeugs erzeugt. Das Modul 4 schließlich enthält für die Funktion "Klimasteuerung" die Rechen- und Schaltungseinrichtung zur Steuerung bzw. Regelung z.B. der Temperatur und der Frischluftzuführung des Passagierraumes des Kraftfahrzeugs. Als abzufragende Komponenten arbeiten z.B. Temperatur-Fühler mit dem Modul 4 zusammen, während die im Modul 4 erzeugten Steuersignale Komponenten wie z.B. Lüftermotoren und Wärmeaggregaten zugeführt werden.

Die Module 1 und 2 können auch in der Weise zusammenwirken, daß fahrzeuginterne Diagnoseabläufe zur Prüfung der Komponenten etc. vorgenommen werden und daß die entsprechenden Ergebnisse wie z.B. Informationen über Ort und Art von Fehlern vom Modul 1 angezeigt oder zur späteren Abfrage gespeichert werden.

Ein möglicher Ablauf für eine in einem Modul realisierte Funktion wird anhand des Moduls 3 näher erläutert. Das Modul 3 erzeugt adressierte Abfrage-Datenwörter, die über die Datenausgänge 7 des Moduls 3 auf das Datenbus-System 9 gegeben werden. Über das Datenbus-System 9 werden die erwähnten Abfrage-Datenwörter den Dateneingängen 10 der Sendeeinheit 11 zugeführt. Die Sendeeinheit 11 ordnet diesen Abfrage-Datenwörtern des Moduls 3 die betreffenden Komponenten, d.h. die hier abzufragenden Radsensoren zu. Über den Anschluß 12 erhält die Sendeeinheit 11 beispielsweise periodisch alle erforderlichen Sensor-Ausgangssignale zugeführt, die von den entsprechenden Komponenten wie z.B. dem Sensor 21 über die zugeordnete Unterverteilungs-Einrichtung (z.B. 17) und den zugeordneten Multiplex-Anschluß 14 der Unterverteilungs-Einrichtung 17 auf das Multiplex-Leitungssystem 13 gegeben werden. Auf diese Weise werden also die erforderlichen Sensor-Signale dem Modul 3 über die Sendeeinheit 11 in Form von Datenwörtern zugeführt. Es ist auch möglich, daß die Sendeeinheit 11 Speicher zur Speicherung der aufeinanderfolgenden Ausgangssignale der Komponenten enthält. In diesem Fall tauschen die Sendeeinheit und die Unterverteilungs-Einrichtungen ständig Daten und Signale aus, unabhängig davon, ob eine Anfrage seitens eines Moduls vorliegt oder nicht.

In dem Modul 3 werden die erwähnten Sensor-Signale ausgewertet und bei Blockierneigung des Kraftfahrzeugs zur Erzeugung von Steuersignalen für die in die Bremsanlage des Kraftfahrzeugs eingeschalteten Magnetventile verwertet. Die erwähnten Steuersignale gelangen als Datenwörter über das Datenbus-System 9 zu der Sendeeinheit 11 und schließlich über das Multiplex-Leitungssystem 13 und die Unterverteilungs-Einrichtungen zu den entsprechenden Magnetventil-Komponenten.

Man erkennt, daß die Reihe der Module 2 bis 4 beliebig erweitert oder verringert werden kann, ohne daß in der Sendeeinheit 11 eine Änderung vorgenommen werden muß. Die Sendeeinheit 11 kann sich gegebenenfalls auf die bloße Weiterleitung und Ubertragung der erwähnten Datenwörter bzw. Steuersignale und Ausgangssignale beschränken, wenn die Leistungsendstufen für die anzusteuernden Komponenten in den zugeordneten Unterverteilungs-Einrichtungen oder in den Komponenten selbst untergebracht sind.

Für den Fall, daß ein Modul ein einem programmierbaren Rechner zugeordnetes Programm enthält, ist eine Anpassung des Moduls an geänderte Forderungen bezüglich der betreffenden Funktion durch einfachen Austausch des Programms möglich.

Bei der Ausbildung der Unterverteilungs-Einrichtungen ist es vorteilhaft, wenn alle Unterverteilungs-Einrichtungen identisch aufgebaut sind. Es ist aber auch möglich, zwei verschiedene Typen von Unterverteilungs-Einrichtungen zu verwenden, von denen der eine Typ nur zum Anschluß von als Sensoren (Radsensoren, Temperaturfühler etc.) ausgebildeten Komponenten dient und der andere Typ zum Anschluß von als Stellglieder, Anzeigeeinheiten und auch Sensoren ausgebildeter Komponenten dient.

Das Multiplex-Leitungssystem 13 kann in beliebiger Weise z.B. sternförmig oder als Ringleitungssystem ausgebildet sein. Entsprechend wird das Datenbus-System 9 an die Anforderungen angepaßt, die hinsichtlich Art, Menge, Priorität und Länge der Datenwörter vorgegeben sind.

Das Leitungssystem des Multiplex-Leitungssystems kann außer aus elektrischen Leitungen auch aus Signal- und Steuerleitungen anderer Art (optisch, pneumatisch etc.) aufgebaut sein.

## Patentansprüche

1. Multiplex-System zum Abfragen und Steuern von mehreren Komponenten (18, 19, 20, 21) eines Fahrzeugs mit folgenden Merkmalen:
a) es sind mehrere Unterverteilungs-Einrichtungen (17, 23, 25) vorgesehen, an die jeweils mehrere der Komponenten angeschlossen sind,
b) es ist eine zentrale Sendeeinheit (11) vorgesehen, an die die Unterverteilungs-Einrichtungen (17, 23, 25) über ein Multiplex-Leitungssystem (13) angeschlossen sind,
c) an die zentrale Sendeeinheit (11) ist über einen Bus (9) eine Anzeige- und Bedieneinheit (1) angeschlossen,
gekennzeichnet durch folgende Merkmale:
d) die zentrale Sendeeinheit (11) weist einen zusätzlichen Datenanschluß (10) mit definierter Schnittstelle auf,
e) an den zusätzlichen Datenanschluß (10) sind über ein Bus-System (9) übergeordnete Module (2, 3, 4) mit eigener Intelligenz und eigenem Mikrocomputer über Steckvorrichtungen anschließbar, die zur Steuerung oder Regelung von unterschiedlichen Fahrzeugsystemen dienen,
f) die zentrale Sendeeinheit (11) leitet die Befehle der Module (2, 3, 4) an die zugehörigen Komponenten (18, 19, 20, 21) weiter,
g) die zentrale Sendeeinheit (11) fragt die Komponenten (18, 19, 20 21) nacheinander oder bei Bedarf prioritätsabhängig ab und übermittelt nacheinander oder bei Bedarf die Signale von als Sensoren (21) ausgebildeten Komponenten zu den zugehörigen Modulen.

2. Multiplex-System nach Anspruch 1, dadurch gekennzeichnet, daß das Datenbus-System (9) so ausgebildet ist, daß mehrere Module (1, 2, 3, 4) im Multiplex-Betrieb mit der zentralen Sendeeinheit (11) Daten austauschen können.

3. Multiplex-System nach Anspruch 1, dadurch gekennzeichnet, daß die Unterverteilungs-Einrichtungen (17, 23, 25) identisch ausgebildet sind.

4. Multiplex-System nach wenigstens einem der Ansprüche 1 bis 3, dadurch gekennzeichnet, daß zwei verschiedene Typen von Unterverteilungs-Einrichtungen vorgesehen sind, von denen der eine Typ (23) nur zum Anschluß von als Sensoren ausgebildeten Komponenten dient und der andere Typ (17, 25) zum Anschluß von als Stellglieder, Anzeigeeinheiten und Sensoren ausgebildeten Komponenten dient.

5. Multiplex-System nach wenigstens einem der vorhergehenden Ansprüche, dadurch gekennzeichnet, daß die zentrale Sendeeinheit (11) wenigstens einen Speicher zur Speicherung mehrerer aufeinanderfolgender Komponenten-Ausgangssignale enthält.

6. Multiplex-System nach wenigstens einem der vorhergehenden Ansprüche, dadurch gekennzeichnet, daß die Unterverteilungs-Einrichtungen (17, 23, 25) und das Multiplex-Leitungssystem (13) so ausgebildet sind, daß die Komponenten der Unterverteilungs-Einrichtungen (17, 23, 25) mittels adressierter Befehle zu beliebigen Zeiten abgefragt und/oder gesteuert werden können.

7. Multiplex-System nach wenigstens einem der vorhergehenden Ansprüche, dadurch gekennzeichnet, daß für die Übertragung von Daten und Signalen auf dem Datenbus-System (9) und/oder dem Multiplex-Leitungssystem (13) eine Prioritäts Schaltungseinrichtung zur bevorzugten Übertragung vorbestimmter Daten und Signale vorgesehen ist.

## Claims

1. A multiplex system for interrogating and controlling several components (18, 19, 20, 21) of a vehicle, having the following features:
a) several sub-distribution arrangements (17, 23, 25) are provided, to each of which several of the components are connected;
b) a central transmitter unit (11) is provided, to which the sub-distribution arrangements (17, 23, 25) are connected through a multiplex line system (13);
c) a display and servicing unit (1) is connected to the central transmitter unit (11) through a bus (9),
**characterised by the following features:**
d) the central transmitter unit (11) has an additional data connection (10) of defined interface,
e) primary modules (2, 3, 4) with their own intelligence and their own microcomputers are arranged to to be connected through a bus system (9) to the additional data connection (10) using plug-in devices which serve to control or regulate different vehicle systems;
f) the central transmitter unit (11) relays the commands of the modules (2, 3, 4) to the associated components (18, 19, 20, 21),
g) the central transmitter unit (11) interrogates the components (18, 19, 20, 21) in succession or, as required, according to priority, and conveys the signals of components constructed as sensors (21) in succession or as required to the associated modules.

2. A multiplex line system according to claim 1, characterized in that the data bus system (9) is constructed so that several modules (1, 2, 3, 4) can exchange data with the central transmitter unit (11) in multiplex operation.

3. A multiplex line system according to claim 1, characterized in that the sub-distribution arrangements (17, 23, 25) are of identical construction.

4. A multiplex line system according to at least one of claims 1 to 3, characterized in that two different types of sub-distribution arrangements are provided, of which one type (23) serves merely for connection of components constructed as sensors, and of which the other type (17, 25) serves for connection of components constructed as actuators, display units and sensors.

5. A multiplex line system according to at least one of the preceding claims, characterized in that the central transmitter unit (11) contains at least one memory for storing several successive component output signals.

6. A multiplex line system according to at least one of the preceding claims, characterized in that the sub-distribution arrangements (17, 23, 25) and the multiplex line system (13) are constructed so that the components of the sub-distribution arrangements (17, 23, 25) can be interrogated and/or controlled at any time by means of addressed commands.

7. A multiplex line system according to at least one of the preceding claims, characterized in that a priority switching arrangement for preferred transmission of predetermined data and signals is provided for the transmission of data and signals on the data bus system (9) and/or on the multiplex line system (13).

## Revendications

1. Système multiplexé d'interrogation et de commande de plusieurs composants (18, 19, 20, 21) d'un véhicule à moteur, présentant pour propriétés
a) qu'il est prévu plusieurs dispositifs de sous-répartition (17, 23, 25) à chacun desquels sont reliés plusieurs composants,
b) qu'il est prévu une unité centrale d'émission (11) à laquelle les dispositifs de sous-répartition (17, 23, 25) sont raccordés par un système multiplexé de transmission (13),
c) qu'une unité d'affichage et de commande (1) est raccordée par un bus (9) à l'unité centrale d'émission (11)
caractérisé
d) en ce que l'unité centrale d'émission (11) présente un raccordement supplémentaire de données offrant une interface définie,
e) en ce que, à ce raccordement supplémentaire de données (10), peuvent être raccordés par un bus (9) par des dispositifs enfichables des modules hiérarchiquement supérieurs (2, 3, 4) possédant leur propre intelligence et leur propre micro-ordinateur et servant à commander ou réguler différents systèmes du véhicule à moteur,
f) en ce que l'unité centrale d'émission (11) transmet les instructions des modules (2, 3, 4) aux composants correspondants (18, 19, 20, 21),
g) en ce que l'unité centrale d'émission (11) interroge successivement les composants (18, 19, 20, 21)en fonction de priorités et successivement ou, si besoin est, les signaux de composants réalisés en tant que capteurs (21) aux modules correspondants.

2. Système multiplexé selon la revendication 1, caractérisé en ce que le système de bus de données (9) est conçu de manière à ce que plusieurs modules (1, 2, 3, 4) puissent échanger des données avec l'unité centrale d'émission (11) en mode multiplexé.

3. Système multiplexé selon la revendication 1, caractérisé en ce que les dispositifs de sous-répartition (17, 23, 25) sont de construction identique.

4. Système multiplexé selon au moins l'une des revendications 1 à 3, caractérisé en ce qu'il est prévu deux types différents de dispositifs de sous-répartition, le premier type (23) ne servant qu'à raccorder des composants à fonctions de capteur et le second (17, 25) des composants fonctions d'actionneurs, d'unités d'affichage et de capteurs.

5. Système multiplexé selon au moins l'une des revendications précédentes, caractérisé en ce que l'unité centrale d'émission (11) possède au moins une mémoire pour le stockage de plusieurs signaux de sortie successifs des composants.

6. Système multiplexé selon au moins l'une des revendications précédentes, caractérisé en ce que les dispositifs de sous-répartition (17, 23, 25) et le système multiplexé de transformation (13) sont conçus de manière que les composants des dispositifs de sous-répartition (17, 23, 25) puissent être interrogés et/ou commandés instants quelconques à d'instructions adressées.

7. Système multiplexé selon au moins l'une revendications précédentes, caractérisé en ce qu'il est prévu pour la transmission de données et de signaux sur le système de bus de données (9) et/ou le système multiplexé de transmission (13) un circuit de priorité permettant de transmettre avec priorité certaines données ou certains signaux prédéterminés.
